# EUROPEAN PATENT SPECIFICATION

(11) **EP 1 532 475 B1**
(45) Date of publication and mention of the grant of the patent: **12.03.2008**
(21) Application number: 02781989.5
(22) Date of filing: 30.10.2002
(51) Int. Cl.: G02B 6/00, C03B 37/027

(54) **APPARATUS FOR APPLYING SPIN TO OPTICAL FIBER AND OPTICAL FIBER MANUFACTURING METHOD AND APPARATUS USING THE SAME**
VORRICHTUNG ZUM VERDREHEN EINER OPTISCHEN FASER, HERSTELLUNGSVERFAHREN DER OPTISCHEN FASER, UND VORRICHTUNG, DIE DIESE VERWENDET
APPAREIL PERMETTANT D'APPLIQUER UN MOMENT ANGULAIRE A UNE FIBRE OPTIQUE ET PROCEDE ET APPAREIL DE FABRICATION D'UNE FIBRE OPTIQUE METTANT EN OEUVRE L'APPAREIL PRE-CITE

(30) Priority: 31.08.2002 KR 2002052299
(43) Date of publication of application: 25.05.2005
(73) Proprietor: LG Cable Ltd., Seoul 135-721 (KR)
(72) Inventor: KWON, Young-Il, 138-747 Seoul (KR); BAE, Sang-Joon, 136-816 Seoul (KR); LEE, Joon-Keun, 137-794 Seoul (KR); JANG, Myung-Ho, Chilgok-gun, 718-844 Gyeongsangbuk-do (KR); LEE, Bong-Hoon, 440-330 Suwon-si, Gyeonggi-do (KR)
(74) Representative: Zeitler - Volpert - Kandlbinder
(86) International application number: PCT/KR2002/002017
(87) International publication number: WO 2004/021055

(56) References cited:
- US-A- 5 418 881
- US-B1- 6 324 872
- US-B1- 6 347 537

## Description

### TECHNICAL FIELD

The present invention relates to manufacturing an optical fiber, and more particularly to method and apparatus for applying a spin to an optical fiber in order to manufacturing an optical fiber having an ultra- low Polarization Mode Dispersion (PMD).

### BACKGROUND ART

A single mode optical fiber with a circular symmetric structure theoretically has two orthogonal polarization modes which are independent and compensated each other. Generally, an electric field of the light propagating through an optical fiber can be considered as linear overlap of such two peculiar polarization modes. In the single mode optical fiber in fact, compensation of the two polarization modes is generated due to defective factors such as symmetric lateral stress or eccentricity of a circular core. These two modes are propagated at different phase rates, hence two modes have different propagation constants (β₁ and β₂). This difference of propagation constants is called double refraction (Δβ), and the increase of double refraction means the increase of rate difference between two polarization modes. Differential time delay between two polarization modes is called Polarization Mode Dispersion (hereinafter, referred to as "PMD"). The presence of PMD is one of factors causing difficulty in high-speed transmission or analog data transmission.

There is known a method directed to lowering PMD by making the optical fiber be twisted with a pitch far less than its beat length so that the polarization modes can be gradually compensated due to relative delay between the modes.

WO83/00232 and Japanese Patent Laid-open Publication H8-59278 disclose a method of drawing an optical fiber with rotating an optical fiber preform at a high speed.

In addition, Japanese Patent Laid-open Publication H7-69665 discloses a method of drawing an optical fiber preform, which is twisted with a short pitch.

However, in these methods, the optical fiber is twisted to one direction, so an elastic torque stress is accumulated in the optical fiber. In addition, since a rotating speed of the preform should be rapidly increased for equivalence to the rapidity of a drawing speed, the above methods are not commercially practical.

US Patent Nos. 5,298,047 and 5,418,881 disclose a method of applying a torque to an optical fiber so that a spin imparted on the optical fiber has non-constant spatial frequency (spins/m) by canting a guide roller contacted with the coated optical fiber at a certain angle with respective to a drawing axis or linearly reciprocating the guide roller to a direction perpendicular to the drawing axis.

US Patent Nos. 5,943,466 and 6,240,748 disclose a method of generating a torque to an optical fiber strand by guiding the optical fiber strand, after forming a coating layer on an optical fiber, with a canting guide roller, which is reciprocating so that a tilt of its rotary axis is changed, and then guiding the optical fiber strand with a guide roller of which a rotary axis is fixed. Particularly, '466 and '748 are characterized in that the spin function generating a torque to the optical fiber strand is substantially not a sine function, but a time-varying complex function having at least two peak values such as a frequency-modulated sine function or an amplitude-modulated sine function.

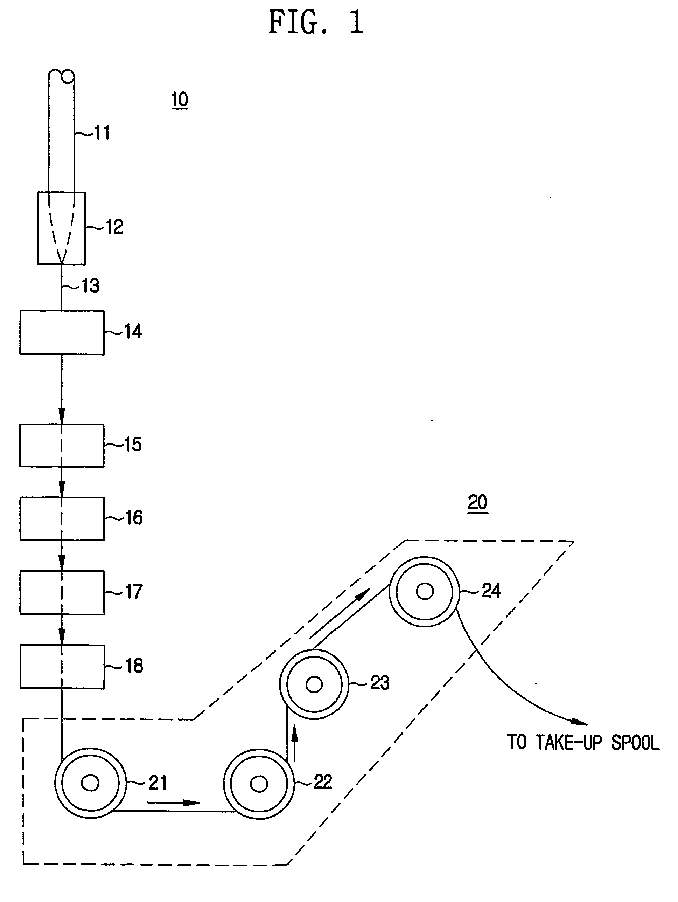

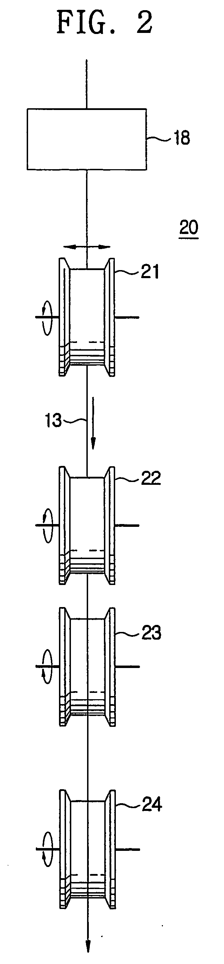

The above conventional techniques are described in more detail with reference to FIGs. 1 and 2.

First, FIG. 1 shows a schematic configuration of the optical fiber manufacturing device 10 disclosed in the above US Patents.

An optical fiber preform 11 is slowly supplied to a furnace 12, and an optical fiber 13 is drawn from a neck-down portion of the preform. A bare optical fiber drawn as above (or, an uncoated optical fiber) is provided through a diameter monitor 14 to a coating device 15 where a coating polymer is coated on the bare optical fiber relatively cooled. If this coated optical fiber passes through a concentric coating monitor 16, the optical fiber then passes through a hardening device 17. The hardening device 17 typically has a UV lamp. At a downstream of the hardening device 17, a coating diameter monitor 18 and a following guide means (i.e., rollers 21, 22 and 23) and a drive means (i.e., capstan) are provided. The guide roller 21 gives a first contact point which is contacted with the optical fiber for the first time. At this point, the optical fiber is protected by the polymer coating which is already hardened. The capstan 24 gives a draw force, and the optical fiber from the capstan 24 is typically advanced to a take-up means (e.g. a take-up spool).

The guide roller 21 cants with being inclined a predetermined angle to a drawing axis or linearly reciprocates to a direction perpendicular to the drawing axis in order to provide a spin to the optical fiber. At this time, the spin function is substantially a sine function or a frequency-modulated or amplitude-modulated sine function.

FIG. 2 shows an example of the spin applying device used in the manufacturing device of FIG. 1.

Referring to FIG. 2, the coated optical fiber 13 is transferred through the coating diameter monitor 18 to the guide roller 21 along the drawing axis by using the capstan 24. The guide roller 21 linearly reciprocates to a direction perpendicular to the drawing axis with being contacted with the coated optical fiber 13, so the optical fiber contacted with a surface of the guide roller is twisted clockwise or counterclockwise due to a frictional force. At this time, as the guide roller 21 linearly reciprocates, the optical fiber contacted with the roller also vibrates along the drawing axis. In this case, since the vibration generated at a contact point of the roller is transferred to a lower end of the coating device without any control, a coating center can be discordant with a drawing center and thus the regularity of coating cannot be ensured.

In addition, since a contact surface of the guide roller 21 forms a flat plane without any slope, the contacted optical fiber can be slipped on the contact surface as the roller moves. This slipping obstructs twist of the optical fiber which is caused by a frictional force, so the optical fiber cannot be provided with a regular spin.

Moreover, the coated optical fiber passing through the coating device is contacted with the guide roller 21 for the first time. Thus, in order to increase a spatial frequency of the spin (i.e. a spin rate [spins/m]) applied to the optical fiber, an amplitude of the guide roller 21 should be grown large. However, as the amplitude of the guide roller 21 increase, a vibration of the optical fiber also becomes increased and the regularity of coating is further deteriorated.

Therefore, there is needed to develop a spin applying device which may not only vibrate the guide roller with an amplitude capable of obtaining the regularity of coating but also ensure a high spin rate.

There have been proposed various attempts to solve the problem of the prior art.

Korean Patent No. 10-230463 by Samsung Electronics discloses an optical fiber drawing device in which many support rollers are arranged for supporting an optical fiber not to escape from its original position between the guide rollers and a coating device so that the optical fiber is not deviated from a drawing axis with a certain deviation as the guide rollers providing a torque to the optical fiber moves. However, the patented technique of Samsung Electronics is lack of practicality in a commercial aspect since the mechanism for restraining movement of the optical fiber is too complex.

In addition, US Patent No.6,324,872 by Blaszyk et al. discloses a spin applying device in which a V-shaped support roller is positioned between a coating device and a guide roller for applying a spin. However, Blaszyk et al. failed to suggest or imply that the slipping of the optical fiber can be prevented and the spin rate can be controlled by suitably designing a structure of a guide roller and a position relation between the support roller and the guide roller.

EP 0 729 919 A1 by Onishi et al. discloses a structure in which a pair of guide rollers are arranged at an upper portion of a canting roller in order to restrain movement of an optical fiber within a certain deviation so that the optical fiber does not escape from the drawing axis. However, like Blaszyk et al., Onishi et al. failed to suggest or imply that the slipping of the optical fiber can be prevented and the spin rate can be controlled by suitably designing a configuration of a guide roller and a position relation between the support roller and the guide roller.

US Patent Laid-open Publication No.2001/20374 by Roba et al. and Japanese Patent Laid-open Publication No.2000-247675 disclose a technique of restraining the slipping of the optical fiber by designing a contact surface of a roller, which provides an alternating torque to the optical fiber, in a V shape. However, these conventional arts also failed to suggest or imply a position relation between the support roller and the guide roller for controlling a spin rate, and mechanism for providing a torque to the optical fiber and overall configuration of the spin applying device are different from the present invention.

### DISCLOSURE OF INVENTION

The present invention provides a method of manufacturing an optical fiber which may ensure a high spin rate even while driving a roller with a low amplitude for obtaining regularity of coating.

In addition, the present invention designs the structure of the roller so that an optical fiber contacted with a contact surface of the roller, which applies a spin to the optical fiber, is not slipped.

The present invention also provides a method of restraining movement of the optical fiber so that a vibration generated at a point where a twist is induced to the optical fiber is not transferred to a coating device.

Inventors have found that, a moving velocity or an amplitude of the roller should be increased to improve a spin rate of the optical fiber, in a spin applying mechanism which induces a torque to the optical fiber by linearly reciprocating the driving roller, contacted with the coated optical fiber, to a direction perpendicular to a drawing axis. However, increasing the moving velocity or amplitude of the roller has various limitations, and particularly the increase of the amplitude causes the optical fiber to be deviated greatly from the coating center, so the regularity of coating is seriously deteriorated. Thus, the inventors conceived an idea that the spin rate can be controlled by means of positioning a separate guide roller between the driving roller and the coating device and then adjusting a distance between the guide roller and the driving roller. In other words, if the driving roller vibrates with a constant amplitude, a vibration angle (or, an angle between a drawing axis and an optical fiber positioned between the driving roller and the guide roller) becomes large and the spin rate of the optical fiber is increased as the distance is shortened. On the contrary, as the distance is lengthened, the vibration angle of the optical fiber is decreased and the spin rate of the optical fiber is reduced.

In order to realize the above idea, the present invention provides an apparatus according to claim 1.

In addition, there is also provided a method for manufacturing an optical fiber according to claim 9.

In addition, for the purpose of obtaining the regularity of coating, the vibration of the contacted optical fiber corresponding to the vibration of the driving roller should be transferred to a coating point so that the optical fiber may not be deviated more than a predetermined range from a coating center.

In this aspect, the present invention arranges a guide roller, of which a contact surface has an approximate V shape, between the coating device and the driving roller. Thus, though the optical fiber at an upper end of the driving roller deviates more than a predetermined range from the drawing axis, the optical fiber can be substantially coincident with the coating center at a lower end of the coating device.

In addition, the present invention also provides an optical fiber manufacturing apparatus in which the above-mentioned spin applying apparatus is arranged between a coating device and a take-up bobbin. With this configuration, the present invention allows easy manufacture of an optical fiber having ultra-low PMD without the use of expensive additional equipment. In particular, a spin spatial frequency (i.e., spin ratio) can be easily controlled as desires by adjustment of the distance between the driving roller and the guide roller of the spin applying apparatus.

### BRIEF DESCRIPTION OF THE DRAWINGS

These and other features, aspects, and advantages of preferred embodiments of the present invention will be more fully described in the following detailed description, taken accompanying drawings. In the drawings:
FIG. 1 is a schematic view showing a typical optical fiber drawing device according to the prior art;
FIG. 2 is a schematic view showing a spin applying unit of the device shown in FIG. 1;
FIG. 3 is a schematic view showing an optical fiber drawing device according to a preferred embodiment of the present invention;
FIG. 4 is a schematic arrangement plan showing a spin applying device according to a preferred embodiment of the present invention;
FIG. 5 shows a basic configuration of the spin applying device according to a preferred embodiment of the present invention;
FIGs. 6a to 6c are vertical sectional views respectively showing a guide roller, a driving roller and a support guide roller which may be used in the spin applying device of the present invention;
FIG. 7 shows a driving device for linearly reciprocating the driving roller according to a preferred embodiment of the present invention;
FIGs. 8a to 8c are enlarged vertical sectional views for illustrating that the optical fiber contacting with a contact surface of the driving roller is twisted due to a frictional force on the contact surface of the driving roller;
FIGs. 9a and 9b show a correlation between a distance (*l*) from the guide roller to the driving roller and a vibration angle (θ) when an amplitude of the driving roller is constant; and
FIG. 10 is for illustrating that the guide roller guides the coated optical fiber so that the vibration of the driving roller is not transferred to a lower end of the coating device.

### BEST MODES FOR CARRYING OUT THE INVENTION

Hereinafter, preferred embodiments of the present invention will be described in detail with reference to the accompanying drawings.

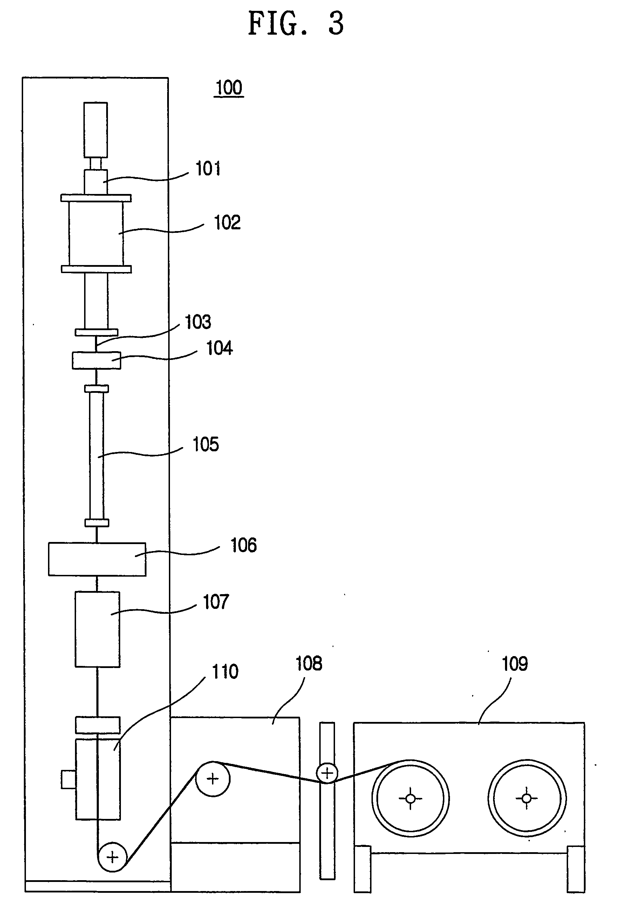

FIG. 3 shows a schematic configuration of an optical fiber manufacturing apparatus 100 according to the present invention.

The optical fiber manufacturing apparatus 100 heats an optical fiber preform 101 in a furnace 102 to a high temperature, and then draws a bare optical fiber 103 from a neck-down portion of the preform which is softened. The drawn bare optical fiber 103 is passing through an outer circumference measurer 104 and cooled in a cooling device 105, and then coated with an ultraviolet hardening resin at least one time in a coating device 106. The coated optical fiber coated in the coating device 106 is then hardened in a hardening device 107 and then transferred to a spin applying device 110.

The optical fiber is twisted with a predetermined spin rate in the spin applying device 110 and then traveled through a driving device (i.e., capstan) 108, which controls a drawing speed of the optical fiber, to a take-up device (i.e., a take-up bobbin) 109.

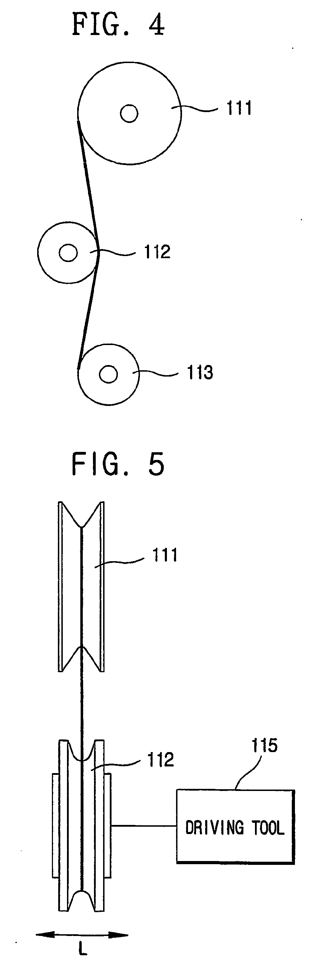

FIG. 5 shows a preferred configuration of the spin applying device 110.

The spin applying device 110 according to the present invention includes a guide roller 111, a driving roller 112 positioned below the guide roller in a drawing direction, and a driving tool 115 for linearly reciprocating the driving roller in an arrowed direction perpendicular to the drawing axis. The guide roller 111 and the driving roller 112 become rotated on the center of their rotary axes (i.e., axes perpendicular to the drawing axis) as the optical fiber moves along the drawing axis since the guide roller 111 and the driving roller 112 are contacted with the drawn optical fiber 103.

In addition, the guide roller 111 and the driving roller 112 are spaced apart to a drawing axis direction, and contacted with the optical fiber with being faced to each other on the basis of the drawing axis.

A drawing direction of the optical fiber contacted with the driving roller 112 should be substantially coincident with a drawing direction of an optical fiber drawn at a lower end of the coating device 106 and a drawing direction of an optical fiber contacted with the guide roller 111. In other words, rotary axes of the guide roller 111 and the driving roller 112 are on the same plane, and parallel to each other on the plane. Thus, the optical fiber passing through the coating device 106 to the driving roller 112 does not experience any path change as for its drawing direction.

Particularly, it is preferred that the guide roller 111 is contacted with the coated optical fiber for the first time at an area between the coating device 106 and the driving roller 112.

In addition, though it is shown in the drawing that the driving roller 112 linearly reciprocates with a constant amplitude L on the center of the drawing axis, the present invention is not limited to that example. In other words, the driving roller 112 can be vibrated on the center of an axis, which is substantially not coincident with the drawing axis.

The spin applying device 110 of the present invention may also include a separate support guide roller positioned at a downstream of the driving roller 112, i.e., between the driving roller 112 and the capstan 108, for guiding the coated optical fiber 103 to the take-up bobbin 109 so as to be coincident with the drawing axis.

Of course, it is also possible to arrange a plurality of support guide rollers between the driving roller and the capstan.

An optimized example configuring the spin applying device 110 with two guide rollers and one driving roller is well shown in FIG. 4.

Referring to FIG. 4, the spin applying device 110 of the present invention includes one driving roller 112, which vibrates on the center of the drawing axis by means of a driving tool (not shown), and at least two guide rollers 111 and 113 positioned above and below the driving roller 112 respectively.

The driving roller 112 is positioned between the guide rollers 111 and 113 and contacted with the optical fiber with being faced to the guide rollers 111 and 113 on the basis of the drawing axis.

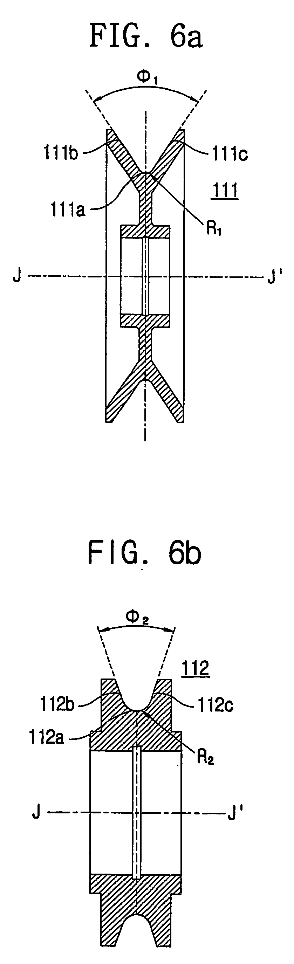

Vertical sectional views of the driving roller and the guide roller are shown in FIGs. 6a to 6c.

Referring to FIG. 6a, the guide roller 111 is symmetric on the basis of the drawing axis J-J', and a guide portion of the guide roller 111 for receiving the optical fiber has an approximate V shape. In other words, the guide portion includes a curved surface 111a at a central valley and right and left inclined surfaces 111b and 111c which form a certain tilt angle φ₁ to the curved surface 111a. The optical fiber is received in the curved surface with being guided by the inclined surfaces.

Thus, a radius R₁ of the curved portion should be larger than a diameter of the received optical fiber. If the radius of the curved surface is smaller than the diameter of the optical fiber, the optical fiber is contacted with the inclined surfaces 111b and 111c, which may damages surfaces of the optical fiber or exerts unnecessary stress to the optical fiber.

In addition, the radius R₁ of the curved portion is preferably smaller than a linear reciprocating distance of the driving roller. If the radius of the curved portion is greater than the linear reciprocating distance of the driving roller, it becomes difficult to form a vibration angle θ described later and the optical fiber can be slipped.

The tilt angle φ₁ should be set suitably so that the optical fiber is not only safely guided without any damage on its coating but also not deviated more than a predetermined range from a coating center due to vibration.

If the tilt angle φ₁ is too small, the optical fiber can be damaged, while if too great, the coating can be irregular.

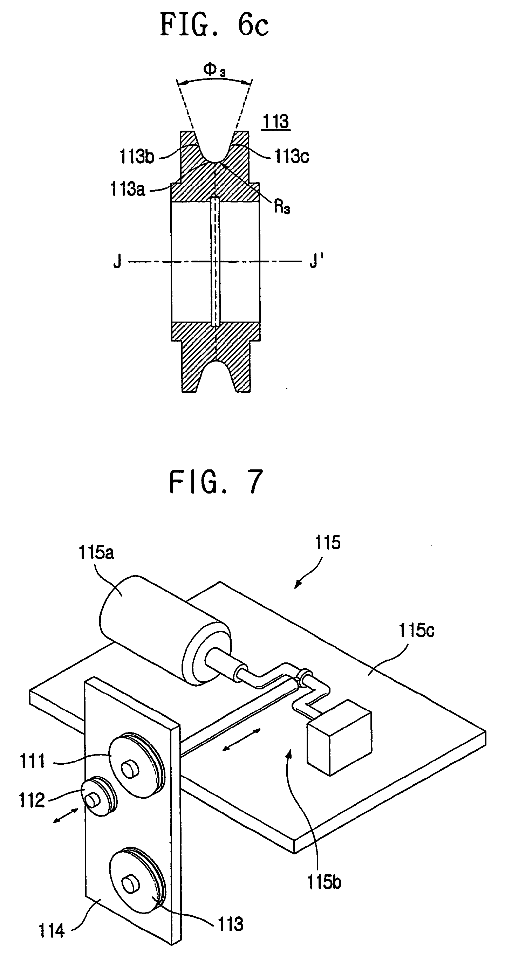

Referring to FIGs. 6b and 6c, the driving roller 112 and the support guide roller 113 according to the present invention are respectively symmetric on the basis of the drawing axis J-J', and have a guide portion for receiving the optical fiber in an approximate V shape. The guide portion includes a curved surface 112a and 113a at a central valley and right and left inclined surfaces 112b, 112c and 113b, 113c which form a certain tilt angle φ₂ and φ₃ to the curved surface 112a and 113a. The optical fiber is received in the curved surface 112a and 113a with being guided by the inclined surfaces 112b, 112c and 113b, 113c.

Thus, a radius R₂ and R₃ of the curved portion should be larger than a diameter of the received optical fiber. If the radius of the curved surface is smaller than the diameter of the optical fiber, the optical fiber is contacted with the inclined surfaces 112b, 112c and 113b, 113c, which may damages surfaces of the optical fiber or exerts unnecessary stress to the optical fiber.

In addition, the radius R₂ of the curved portion is preferably smaller than a linear reciprocating distance of the driving roller. If the radius R₂ of the curved portion is greater than the linear reciprocating distance of the driving roller, it becomes difficult to form a vibration angle θ described later and slipping of the optical fiber can be appeared.

The tilt angle φ₂ should be set suitably so that the optical fiber is not only safely guided without any damage on its coating but also stably twisted without slipping according to vibration of the driving roller while the optical fiber is moving along the inclined surfaces. If the tilt angle φ₂ is too small, the optical fiber can be damaged, while if too great, the optical fiber cannot be twisted stably.

In addition, the tilt angle φ₃ should be set suitably to induce vibration of the driving roller stably without damaging the coating of the optical fiber.

As an example of the present invention, it is preferred that the tilt angle φ₁ and the radius R₁ of the curved surface of the guide roller are smaller than the tilt angle φ₂ and φ₃ and the radius R₂ and R₃ of the curved surface of the driving roller 112 and the support guide roller 113.

FIG. 7 shows a configuration of the driving tool 115 according to a preferred embodiment for illustrating a vibration mechanism of the driving roller 112.

The guide roller 111, the driving roller 112 and the support guide roller 113 are fixed to a frame 114, and a rotary shaft of the driving roller 112 is connected to a crank 115b installed to a base 115c. On the base 115c, installed are a motor 115a and the crank 115b for converting a rotary motion of the motor 115a into a linear reciprocating motion.

Thus, the rotary motion generated by driving the motor 115a is converted into a linear reciprocating motion due to the crank 115b, and the driving roller 112 connected to the crank 115b is thus vibrated to an arrowed direction on the drawing.

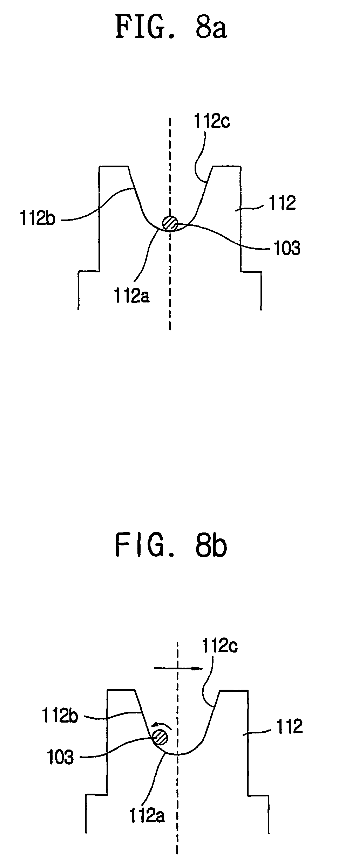

Now, a mechanism of axially twisting the optical fiber contacted with the driving roller as the driving roller vibrates is described with reference to FIGs. 8a to 8c.

First, if the driving roller 112 is moved to an arrowed direction shown in FIG. 8b (i.e., right in the drawing) while the optical fiber 103 is positioned on the curved surface 112a at a center of the contact surface of the driving roller 112, the contacted optical fiber 103 rolls along the inclined surface 112b opposite to a moving direction of the roller (i.e., a left inclined surface) due to dynamic frictional force with a roller surface. Thus, the optical fiber 103 is twisted to a counterclockwise direction.

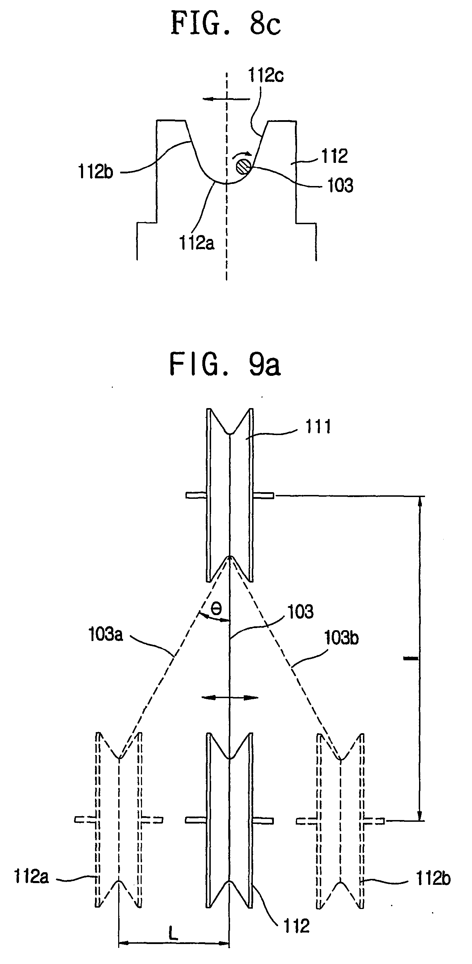

To the contrary, if the driving roller 112 moves to an arrowed direction shown in FIG. 8c (i.e., left in the drawing) while the optical fiber 103 is positioned on the curved surface 112a at a center of the contact surface of the driving roller 112, the contacted optical fiber 103 rolls along the inclined surface 112c opposite to a moving direction of the roller (i.e., a right inclined surface) due to dynamic frictional force with a roller surface. Thus, the optical fiber 103 is twisted to a clockwise direction.

Thus, if the driving roller linearly reciprocates (i.e., vibrates) on the basis of the drawing axis with a constant amplitude and a constant vibration frequency, there are generated alternating spins to the optical fiber in clockwise/counterclockwise directions.

A spin rate (the spin number per unit length [spins/m]) of the optical fiber depends on the tilt angle φ₂, amplitude, vibration rate and drawing speed of the driving roller. Particularly, if the amplitude of the driving roller is increased, the optical fiber can be deviated too much from the drawing axis, which deteriorates regularity of coating.

Thus, there is needed a way to control the spin rate of the optical fiber as desired, without deteriorating the coating regularity while the tilt angle, the vibration rate and the drawing speed of the driving roller are determined to certain values.

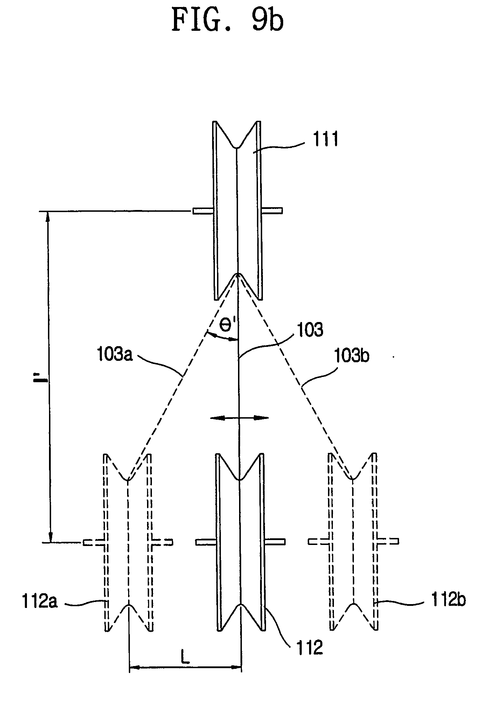

FIGs. 9a and 9b shows a method of controlling a spin rate of the optical fiber by adjusting a length (*l*) between the guide roller 111 and the driving roller 112 according to the present invention.

As shown in FIG. 9a, if the driving roller 112 vibrates with a constant amplitude L in an arrowed direction to the drawing axis 103, there is formed a certain vibration angle (θ) between the optical fiber 103a, 103b and the drawing axis 103.

If the amplitude (L) is constant, the spin rate increases as the vibration angle (θ) is increased. Thus, if the amplitude (L) is constant and the length (*l*) between the driving roller and the guide roller is increased, the vibration angle (θ) is reduced and the spin rate is decreased.

Comparing the case of FIG. 9a with the case of FIG. 9b, if the amplitude (L) is identical and the distance between the driving roller and the guide roller increases from *l* to *l*' (here, *l* < *l*'), the vibration angle is reduced from θ to θ' (here, θ > θ') and the spin rate of the optical fiber is also decreased in proportion to the reduction of the vibration angle.

Thus, while other spin control factors such as a drawing speed, a vibration rate and an amplitude are determined, the spin rate (spins/m) of the optical fiber can be controlled as desired by suitably adjusting the distance (*l*) between the driving roller and the guide roller.

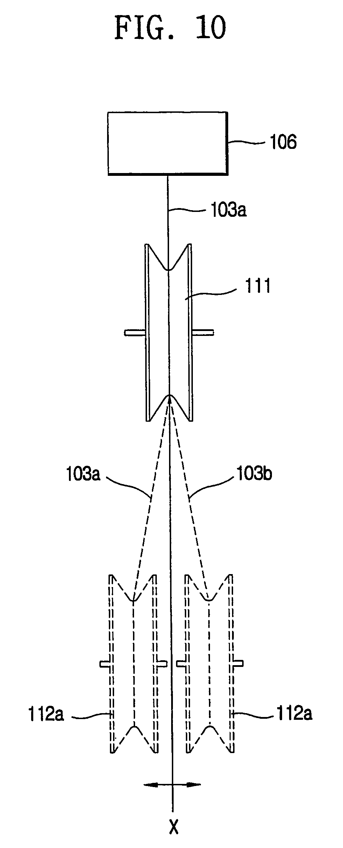

In addition, the present invention may restrain movement of the optical fiber so that vibration of the optical fiber generated by the driving roller 112 is not transferred to the coating device 106 by means of positioning the guide roller 111 above the driving roller 112 as shown in FIG. 10. In other words, though the driving roller 112 vibrates on the center of the drawing axis X, the guide roller 111 of the present invention confines the coated optical fiber within a guide range having a predetermined deviation. Thus, the present invention may prevent the vibration below the guide roller 111 from being transferred to the coating device 106. Therefore, the optical fiber 103a at an upstream of the guide roller 111 is not deviated more than a predetermined range from the drawing axis X but approximately coincident with the coating center, so the regularity of the coating is ensured.

### INDUSTRIAL APPLICABILITY

As described above, the present invention ensures the regular coating by positioning the guide roller of an approximate V shape at an upstream of the driving roller for applying alternating torques to the optical fiber, and also controls the spin rate of the optical fiber by adjusting the distance between the guide roller and the driving roller.

In addition, since the guide roller and the driving roller have an approximately V-shaped section, the present invention may reduce slipping of the optical fiber on a contact surface and helps the optical fiber to be twisted more easily.

## Claims

1. An apparatus for applying a spin to an optical fiber, which is installed between a coating device (106) for coating the optical fiber (103) drawn from an optical fiber preform (101) and a bobbin (109) for taking up the coated optical fiber, the apparatus comprising:
a driving roller (112) having contact surfaces (112b, 112c) with an approximate V shape so that a curved surface is formed at a central valley (112a) of the contact surfaces, the driving roller linearly reciprocating to a direction perpendicular to a drawing axis with receiving the coated optical fiber on the curved surface so as to give a rotary force in a circumferential direction to the coated optical fiber;
a roller driving means (115) for vibrating the driving roller to a direction perpendicular to the drawing axis; and
a guide roller (111) contacted with the coated optical fiber in an area between a lower end of the coating device (106) and an upper end of the driving roller (112), the guide roller guiding the contacted optical fiber in a longitudinal direction so that the optical fiber is not deviated more than a predetermined range on the basis of the drawing axis,
wherein a distance (I) between the driving roller (112) and the guide roller (111) in a drawing axis direction is set to satisfy a predetermined spin rate (spins/m).

2. The apparatus for applying a spin to an optical fiber according to claim 1,
wherein contact surfaces (111b, 111c) of the guide roller (111) have an approximate V shape, and a curved surface is formed at a central valley (111a) of the contact surfaces,
whereby the optical fiber below the coating device is substantially coincident with a coating center though the optical fiber above the driving roller is deviated from the drawing axis to a certain degree.

3. The apparatus for applying a spin to an optical fiber according to claim 2,
wherein radii (R1, R2) of the central curved surfaces of the guide roller (111) and the driving roller (112) are at least larger than a diameter of the contacted optical fiber.

4. The apparatus for applying a spin to an optical fiber according to claim 3,
wherein radii (R1, R2) of the central curved surfaces of the guide roller (111) and the driving roller (112) are smaller than a linear reciprocating distance of the driving roller (112).

5. The apparatus for applying a spin to an optical fiber according to claim 4,
wherein the driving roller (112) linearly reciprocates with a constant amplitude and a constant vibration frequency on the center of the drawing axis.

6. The apparatus for applying a spin to an optical fiber according to claim 5,
wherein the guide roller (111) and the driving roller (112) are arranged so that a drawing direction of an optical fiber contacted with the driving roller (112) is substantially coincident with a drawing direction of an optical fiber contacted with the guide roller (111).

7. The apparatus for applying a spin to an optical fiber according to claim 6,
wherein the guide roller (111) and the driving roller (112) are contacted with the optical fiber with facing each other on the basis of the drawing direction.

8. The apparatus for applying a spin to an optical fiber according to claim 3, fur ther comprising a support guide roller (113) installed between the driving roller (112) and the take-up bobbin (109) for introducing the optical fiber to the take-up bobbin (109) to be coincident with the drawing axis.

9. The apparatus for applying a spin to an optical fiber according to claim 8,
wherein contact surfaces (113b, 113c) of the support guide roller (113) have an approximate V shape, and a curved surface is formed at a central valley (113a) of the contact surfaces.

10. The apparatus for applying a spin to an optical fiber according to claim 9,
wherein the driving roller (112) is positioned between the guide roller (111) and the support guide roller (113), and the driving roller is contacted with the optical fiber to face the guide roller (111) and the support guide roller (113) respectively on the basis of the drawing axis.

11. An apparatus for manufacturing an optical fiber comprising:
means (101) for forming a bare optical fiber (102) by drawing an optical fiber preform (103);
means (106) for coating at least one coating layer around the bare optical fiber;
a capstan (108) for controlling a drawing speed of the optical fiber;
a take-up bobbin (109) for winding the optical fiber passing through the capstan around a bobbin; and
an optical fiber twisting device (110) installed between the coating means (106) and the capstan (108) to twist the optical fiber on the basis of a longitudinal axis,
wherein the optical fiber twisting device (110) includes:
a driving roller (112) having contact surfaces (112b, 112c) with an approximate V shape so that a curved surface is formed at a central valley (112a) of the contact surfaces, the driving roller linearly reciprocating to a direction perpendicular to a drawing axis with receiving the coated optical fiber on the curved surface so as to give a rotary force in a circumferential direction to the coated optical fiber;
a roller driving means (115) for vibrating the driving roller to a direction perpendicular to the drawing axis; and
a guide roller (111) contacted with the coated optical fiber in an area between a lower end of the coating device (106) and an upper end of the driving roller (112), the guide roller guiding the contacted optical fiber in a longitudinal direction so that the optical fiber is not deviated more than a predetermined range on the basis of the drawing axis,
wherein a distance (I) between the driving roller (112) and the guide roller (111) in a drawing axis direction is set to satisfy a predetermined spin rate (spins/m).

12. The apparatus for manufacturing an optical fiber according to claim 11,
wherein contact surfaces (111b, 111c) of the guide roller (111) have an approximate V shape, and a curved surface is formed at a central valley (111a) of the contact surfaces,
whereby the optical fiber below the coating device is substantially coincident with a coating center though the optical fiber above the driving roller (112) is deviated from the drawing axis to a certain degree.

13. The apparatus for manufacturing an optical fiber according to claim 12,
wherein radii (R1, R2) of the central curved surfaces of the guide roller (111) and the driving roller (112) is at least larger than a diameter of the contacted optical fiber.

14. The apparatus for manufacturing an optical fiber according to claim 13,
wherein radii (R1, R2) of the central curved surfaces of the guide roller (111) and the driving roller (122) is smaller than a linear reciprocating distance of the driving roller.

15. The apparatus for manufacturing an optical fiber according to claim 14,
wherein the driving roller (112) linearly reciprocates with a constant amplitude and a constant vibration frequency on the center of the drawing axis.

16. The apparatus for manufacturing an optical fiber according to claim 15,
wherein the guide roller (111) and the driving roller (112) are contacted with the optical fiber with facing each other on the basis of the drawing direction; and
wherein the driving roller (111) and the guide roller (112) are arranged so that a drawing direction of an optical fiber drawn at the lower end of the coating device (105) is substantially coincident with a drawing direction of an optical fiber contacted with the driving roller (111).

17. The apparatus for manufacturing an optical fiber according to claim 13, further comprising a support guide roller (113) installed between the driving roller (112) and the take-up bobbin (109) for introducing the optical fiber to the take-up bobbin (109) to be coincident with the drawing axis.

18. The apparatus for manufacturing an optical fiber according to claim 17,
wherein contact surfaces (113b, 113c) of the support guide roller (113) have an approximate V shape, and a curved surface is formed at a central valley (113a) of the contact surfaces;
wherein the support guide roller (113) is contacted with the optical fiber for the first time at an area between the lower end of the driving roller and the take-up bobbin; and
wherein the driving roller (112) is positioned between the guide roller (111) and the support guide roller (113), and the driving roller is contacted with the optical fiber with facing the guide roller (111) and the support guide roller (113) respectively on the basis of the drawing axis.

19. A method of manufacturing an optical fiber, comprising the steps of:
(A) heating an optical fiber preform;
(B) drawing a bare optical fiber (103) from the heated preform;
(C) coating at least one coating layer on the drawn bare optical fiber; and
(D) applying a torque to the coated optical fiber so that the optical fiber drawn from the preform is rotated on the basis of a longitudinal direction thereof,
wherein the step (D) further includes the steps of:
(a) guiding the coated optical fiber so that the optical fiber is not deviated more than a predetermined range from a drawing axis below an optical fiber coating point;
(b) rotating the optical fiber in clockwise and counterclockwise directions by receiving the coated optical fiber on approximately V-shaped contact surfaces of a driving roller (112) which vertically reciprocates on the basis of a axis substantially parallel to the drawing direction below a guiding point; and
(c) controlling an angle (θ) between the vibrating optical fiber and the drawing axis by adjusting an amplitude (A) of the driving roller (112) and a distance (I) between the guiding point and the vibrating point,
whereby a spin rate (spins/m) of the optical fiber generated by rotation is adjusted by controlling the angle (θ) between the vibrating optical fiber and the drawing axis.

20. The method of manufacturing an optical fiber according to claim 19, wherein the driving roller (112) vibrates with a constant amplitude and a constant vibration frequency.

21. The method of manufacturing an optical fiber according to claim 20, wherein in order to increase the spin rate of the optical fiber when the amplitude (A) of the driving roller is constant, the distance (I) between the guiding point and the vibrating point is decreased to increase the vibration angle (θ).

22. The method of manufacturing an optical fiber according to claim 21, wherein a curved surface is formed at a central valley (112a) of the contact surfaces (112b, 112c) of the driving roller (112), and a radius (R2) of the central curved portion is at least greater than a diameter of the contacted optical fiber.

23. The method of manufacturing an optical fiber according to claim 22,
wherein the coated optical fiber is guided by a guide roller (111) in which contact surfaces (111b, 111c) have an approximate V shape and a curved surface is formed at a central valley (111a) of the contact surfaces,
whereby the vibration applied to the optical fiber by the driving roller (112) is restrained not to reach a position near the coating point so that the optical fiber passes through an approximate coating center at the coating point and the coating layer is regularly formed.

## Patentansprüche

1. Vorrichtung zur Erteilung eines Dralls für eine optische Faser, die zwischen einer Beschichtungseinrichtung (106) zur Beschichtung der optischen Faser (103) angeordnet ist, welche von einer optischen Faservorform (101) und einer Spule (109) zur Aufnahme der beschichteten optischen Faser abgezogen wird, umfassend eine Treibrolle (112) mit Kontaktoberflächen (112b, 112c) mit einer annähernd V-Form, so daß in einem mittleren Tal (112a) der Kontaktoberflächen eine gekrümmte Oberfläche gebildet wird, wobei die Treibrolle in eine Richtung lotrecht zu einer Ziehachse geradlinig hin- und herbewegt wird und dabei die beschichtete optische Faser auf den gekrümmten Oberflächen aufnimmt, so daß der beschichteten optischen Faser in Umfangsrichtung eine Drehkraft erteilt wird; des weiteren umfassend eine Rollerantriebseinrichtung (115), mit der die Treibrolle in eine Richtung lotrecht zu der Ziehachse in Schwingung versetzbar ist; und eine Führungsrolle (111), die mit der beschichteten optischen Faser in einem Bereich zwischen einem unteren Ende der Beschichtungseinrichtung (106) und einem oberen Ende der Treibrolle (112) in Berührung tritt, wobei die Führungsrolle die kontaktierte optische Faser in einer Längsrichtung führt, so daß die optische Faser in Bezug auf die Ziehachse nur in einem vorbestimmten Bereich abgelenkt wird, wobei ein Abstand (1) zwischen der Treibrolle (112) und der Führungsrolle (111) in einer Ziehachsrichtung so eingestellt wird, daß eine vorbestimmte Drallgröße (Dralleinheiten / Minute) erreicht wird.

2. Vorrichtung zur Erteilung eines Dralls für eine optische Faser nach Anspruch 1, wobei die Kontaktoberflächen (111b, 111c) der Führungsrolle (111) eine annähernd V-Form aufweisen und in einem mittleren Tal (11a) der Kontaktoberflächen eine gekrümmte Oberfläche ausgebildet ist, so daß die optische Faser unter der Beschichtungseinrichtung im wesentlichen mit einem Beschichtungszentrum zusammenfällt, obgleich die optische Faser über der Treibrolle von der Ziehachse in einem gewissen Maß abweicht.

3. Vorrichtung zur Erteilung eines Dralls für eine optische Faser nach Anspruch 2, **dadurch gekennzeichnet, daß** die Radien (R1, R2) der mittigen, gekrümmten Oberflächen der Führungsrolle (111) und der Treibrolle (112) mindestens größer sind als ein Durchmesser der kontaktierten optischen Faser.

4. Vorrichtung zur Erteilung eines Dralls für eine optische Faser nach Anspruch 3, **dadurch gekennzeichnet, daß** die Radien (R1, R2) der mittigen, gerkrümmten Oberflächen der Führungsrolle (111) und der Treibrolle (112) kleiner sind als ein gerader Wechselabstand der Treibrolle (112).

5. Vorrichtung zur Erteilung eines Dralls für eine optische Faser nach Anspruch 4, **dadurch gekennzeichnet, daß** die Treibrolle (112) sich mit einer konstanten Amplitude und einer konstanten Schwingungsfrequenz auf der Mitte der Ziehachse linear hin- und herbewegt.

6. Vorrichtung zur Erteilung eines Dralls für eine optische Faser nach Anspruch 5, **dadurch gekennzeichnet, daß** die Führungsrolle (111) und die Treibrolle (112) so angeordnet sind, daß eine Zugrichtung einer optischen Faser, die von der Treibrolle (112) berührt wird, mit einer Zugrichtung einer optischen Faser im wesentlichen zusammenfällt, die von der Führungsrolle (111) berührt wird.

7. Vorrichtung zur Erteilung eines Dralls für eine optische Faser nach Anspruch 6, **dadurch gekennzeichnet, daß** die Führungsrolle (111) und die Treibrolle (112) mit der optischen Faser in Berührung kommt, wenn sie auf der Basis der Zugrichtung einander zugewandt sind.

8. Vorrichtung zur Erteilung eines Dralls für eine optische Faser nach Anspruch 3, **gekennzeichnet durch** eine Stützführungsrolle (113), die zwischen der Antriebsrolle (112) und der Aufnahmespule (109) angeordnet ist, um die optische Faser zu der Aufnahmespule (109) einzuführen, so daß sie mit der Ziehachse zusammenfällt.

9. Vorrichtung zur Erteilung eines Dralls für eine optische Faser nach Anspruch 8, **dadurch gekennzeichnet, daß** die Berührungsoberflächen (113b, 113c) der Tragführungsrolle (113) eine annähernd V-Form haben, und daß eine gekrümmte Oberfläche in einer zentralen Vertiefung (113a) der Berührungsoberflächen ausgebildet ist.

10. Vorrichtung zur Erteilung eines Dralls für eine optische Faser nach Anspruch 9, **dadurch gekennzeichnet, daß** die Treibrolle (112) zwischen der Führungsrolle (111) und der Tragführungsrolle (113) angeordnet ist, und daß die Treibrolle mit der optischen Faser so in Berührung steht, daß sie der Führungsrolle (111) bzw. der Tragführungsrolle (113), bezogen auf die Zugachse, zugewendet ist.

11. Vorrichtung zur Herstellung einer optischen Faser, umfassend eine Einrichtung (101) zur Bildung einer reinen optischen Faser (102) durch Ziehen einer optischen Faservorform (103); eine Einrichtung (106) zur Aufbringung wenigstens einer Überzugsschicht rund um die reine optische Faser; eine Haspel (108) zur Steuerung einer Ziehgeschwindigkeit der optischen Faser; eine Aufnahmespule (109) zum Aufwickeln der über die Haspel laufenden optischen Faser rund um eine Spule; und eine Verdrillungseinrichtung (110) für die optische Faser, die zwischen der Beschichtungsvorrichtung (106) und der Haspel (108) angeordnet ist, um die optische Faser um eine Längsachse zu verdrillen, wobei die Verdrillungseinrichtung (110) für die optische Faser folgende Elemente aufweist: eine Treibrolle (112), die Berührungsoberflächen (112b, 112c) aufweist und eine nahezu V-Form besitzt, so daß eine gekrümmte Oberfläche in einer zentralen Vertiefung (112a) der Kontaktoberflächen ausgebildet ist, wobei die Treibrolle sich in einer Richtung lotrecht zu einer Zugachse geradlinig hin- und herbewegt und die beschichtete optische Faser auf der gekrümmten Oberfläche so aufgenommen wird, daß auf die beschichtete optische Faser in einer Umfangsrichtung eine Drehkraft ausgeübt wird; eine Rollenantriebseinrichtung (115), die die Treibrolle in eine Richtung lotrecht zu der Zugachse in Schwingung versetzt; und eine Führungsrolle (111), die mit der beschichteten optischen Faser in einem Bereich zwischen einem unteren Ende der Beschichtungseinrichtung (106) und einem oberen Ende der Treibrolle (112) in Berührung tritt, wobei die Führungsrolle die berührte optische Faser in einer Längsrichtung führt, so daß die optische Faser nicht mehr als um einen vorbestimmten Bereich in Bezug auf die Zugachse abweicht, wobei zwischen der Treibrolle (112) und der Führungsrolle (111) in einer Zugachsenrichtung ein Abstand (I) eingestellt wird, um einer vorbestimmten Drallrate (Dralleinheiten / Minute) zu entsprechen.

12. Vorrichtung zur Herstellung einer optischen Faser nach Anspruch 11, **dadurch gekennzeichnet, daß** die Berührungsoberflächen (111b, 111c) der Führungsrolle (111) eine nahezu V-Form aufweisen und eine gekrümmte Oberfläche in einer zentralen Vertiefung (111a) der Berührungsoberflächen ausgebildet ist, wodurch die optische Faser unter der Beschichtungsvorrichtung mit einer Beschichtungsmitte zusammenfällt, obgleich die optische Faser über die Treibrolle (112) von der Zugachse um ein gewisses Maß abweicht.

13. Vorrichtung zur Herstellung einer optischen Faser nach Anspruch 12, **dadurch gekennzeichnet, daß** die Radien (R1, R2) der zentralen gekrümmten Oberflächen der Führungsrolle (111) und der Treibrolle (112) wenigstens größer sind als ein Durchmesser der berührten optischen Faser.

14. Vorrichtung zur Herstellung einer optischen Faser nach Anspruch 13, **dadurch gekennzeichnet, daß** die Radien (R1, R2) der zentralen gekrümmten Oberflächen der Führungsrolle (111) und der Treibrolle (112) kleiner sind als eine geradlinige, sich hin- und herbewegende Entfernung der Treibrolle.

15. Vorrichtung zur Herstellung einer optischen Faser nach Anspruch 14, **dadurch gekennzeichnet, daß** die Treibrolle (112) sich geradlinig mit einer konstanten Amplitude und einer konstanten Schwingungsfrequenz auf der Mitte der Zugachse hin- und herbewegt.

16. Vorrichtung zur Herstellung einer optischen Faser nach Anspruch 15, **dadurch gekennzeichnet, daß** die Führungsrolle (111) und die Treibrolle (112) mit der optischen Faser in Berührung treten, wobei sie einander in Bezug auf die Ziehrichtung zugewendet sind, und daß die Treibrolle (111) und die Führungsrolle (112) so angeordnet sind, daß eine Zugrichtung einer optischen Faser, die an dem unteren Ende der Beschichtungsvorrichtung (105) gezogen wird, im wesentlichen mit der Zugrichtung einer optischen Faser zusammenfällt, die die Treibrolle (111) berührt.

17. Vorrichtung zur Herstellung einer optischen Faser nach Anspruch 13, ferner **gekennzeichnet durch** eine Tragführungsrolle (113), die zwischen der Treibrolle (112) und der Aufnahmespule (109) angeordnet ist, um die optische Faser zur Aufnahmespule (109) zu leiten, so daß sie mit der Zugachse zusammenfällt.

18. Vorrichtung zur Herstellung einer optischen Faser nach Anspruch 17, **dadurch gekennzeichnet, daß** die Berührungsoberflächen (113b, 113c) der Tragführungsrolle (113) eine annähernd V-Form aufweisen und daß in der zentralen Vertiefung (113a) der Berührungsoberflächen eine gekrümmte Oberfläche ausgebildet ist; wobei die Tragführungsrolle (113) mit der optischen Faser zum ersten Mal in einem Bereich zwischen dem unteren Ende der Treibrolle und der Aufnahmespule in Berührung tritt, und wobei die Treibrolle (112) zwischen der Führungsrolle (111) und der Tragführungsrolle (113) angeordnet ist, und die Treibrolle mit der optischen Faser in Berührung tritt, wobei sie der Führungsrolle (111) bzw. der Tragführungsrolle (113) in Bezug auf die Zugachse zugewendet ist.

19. Verfahren zur Herstellung einer optischen Faser, umfassend die folgenden Schritte: A) Erwärmen einer optischen Faservorform; B) Ziehen einer bloßen optischen Faser (103) aus der erwärmten Vorform; C) Beschichten wenigstens einer Überzugsschicht auf der gezogenen, bloßen optischen Faser; und D) Aufbringen einer Torsionskraft auf die beschichtete optische Faser, so daß die optische Faser, die aus der Vorform gezogen worden ist, in Bezug auf ihre Längsachsenrichtung gedreht wird, wobei der Schritt D) des weiteren die Schritt beinhaltet: a) Führen der beschichten optischen Fasern in der Weise, daß die optische Faser nicht mehr als einen vorbestimmten Betrag von einer Zugachse abweicht, der unter einem optischen Faserbeschichtungspunkt liegt; b) Drehen der optischen Faser in Uhrzeigerrichtung und Gegenuhrzeigerrichtung durch Aufnahme der beschichteten optischen Faser auf annähernd V-förmigen Berührungsoberflächen einer Treibrolle (112), die sich in Bezug auf eine Achse im wesentlichen parallel zu der Ziehrichtung unter einem Führungspunkt hin- und herbewegt; und c) Steuern eines Winkels (θ) zwischen der schwingenden optischen Faser und der Zugachse durch Einstellen einer Amplitude (A) der Antriebsrolle (112) und eines Abstandes (I) zwischen dem Führungspunkt und dem Schwingungspunkt, wodurch eine Drallgeschwindigkeit (Dralleinheiten / Minute) der optischen Faser, erzeugt durch Drehen, eingestellt wird, indem der Winkel (θ) zwischen der schwingenden optischen Faser und der Zugachse gesteuert wird.

20. Verfahren zur Herstellung einer optischen Faser nach Anspruch 19, **dadurch gekennzeichnet, daß** die Treibrolle (112) mit einer konstanten Amplitude und einer konstanten Schwingungsfrequenz schwingt.

21. Verfahren zur Herstellung einer optischen Faser nach Anspruch 20, **dadurch gekennzeichnet, daß** zur Vergrößerung der Drallgeschwindigkeit der optischen Faser, sobald die Amplitude (A) der Treibrolle konstant ist, der Abstand (I) zwischen dem Führungspunkt und dem Schwingungspunkt verringert wird, um dadurch den Schwingungswinkel (θ) zu vergrößern.

22. Verfahren zur Herstellung einer optischen Faser nach Anspruch 21, **dadurch gekennzeichnet, daß** eine gekrümmte Oberfläche in einer zentralen Vertiefung (112a) der Berührungsoberflächen (112b, 112c) der Treibrolle (112) ausgebildet wird, und ein Radius (R2) des zentralen gekrümmten Teils wenigstens größer als ein Durchmesser der berührten optischen Faser ist.

23. Verfahren zur Herstellung einer optischen Faser nach Anspruch 22, **dadurch gekennzeichnet, daß** die beschichtete optische Faser durch eine Führungsrolle (111) geführt wird, bei der die Berührungsoberflächen (111b, 111c) annähernd V-Form haben und eine gekrümmte Oberfläche in einer zentralen Vertiefung (111a) der Berührungsoberflächen ausgebildet wird, wodurch die Schwingung, die auf die optische Faser durch die Treibrolle (112) übertragen wird, so beschränkt wird, daß sie keine Stelle in der Nähe des Beschichtungspunktes erreicht, so daß die optische Faser durch nahezu die Beschichtungspunktmitte läuft und die Beschichtungsablage regelmäßig ausgebildet wird.

## Revendications

1. Appareil pour appliquer un vrillage à une fibre optique, qui est installé entre un dispositif de revêtement (106) pour revêtir la fibre optique (103) tirée depuis une ébauche de fibre optique (101) et une bobine (109) pour recevoir la fibre optique revêtue, l'appareil comprenant :
un rouleau d'entraînement (112) ayant des surfaces de contact (112b, 112c) avec une forme approximativement en V, de sorte qu'une surface incurvée est formée au niveau d'une vallée centrale (112a) des surfaces de contact, le rouleau d'entraînement se déplaçant linéairement en va-et-vient dans une direction perpendiculaire à un axe d'étirage en recevant la fibre optique revêtue sur la surface incurvée de manière à imposer une force de rotation dans une direction circonférentielle à la fibre optique revêtue ;
un moyen d'entraînement de rouleau (115) pour faire vibrer le rouleau d'entraînement dans une direction perpendiculaire à l'axe d'étirage ; et
un rouleau de guidage (111) en contact avec la fibre optique revêtue dans une zone entre une extrémité inférieure du dispositif de revêtement (106) et une extrémité supérieure du rouleau d'entraînement (112), le rouleau de guidage guidant la fibre optique en contact dans une direction longitudinale de telle façon que la fibre optique n'est pas déviée de plus d'une plage prédéterminée sur la base de l'axe d'étirage,
dans lequel une distance (1) entre le rouleau d'entraînement (112) et le rouleau de guidage (111) dans la direction de l'axe d'étirage est fixée de manière à satisfaire un taux de vrillage prédéterminé (tours/mètre).

2. Appareil pour appliquer un vrillage à une fibre optique, selon la revendication 1,
dans lequel des surfaces de contact (111 b, 111 c) du rouleau de guidage (111) ont une forme approximativement en V, et une surface incurvée est formée au niveau d'une vallée centrale (111a) des surfaces de contact,
grâce à quoi la fibre optique au-dessous du dispositif de revêtement coïncide sensiblement avec un centre de revêtement à travers lequel la fibre optique au-dessus du rouleau d'entraînement est déviée à un certain degré depuis l'axe d'étirage.

3. Appareil pour appliquer un vrillage à une fibre optique, selon la revendication 2, dans lequel les rayons (R1, R2) des surfaces incurvées centrales du rouleau de guidage (111) et du rouleau d'entraînement (112) sont au moins supérieurs à un diamètre de la fibre optique en contact.

4. Appareil pour appliquer un vrillage à une fibre optique, selon la revendication 3, dans lequel les rayons (R1, R2) des surfaces incurvées centrales du rouleau de guidage (11) et du rouleau d'entraînement (112) sont plus petits qu'une distance linéaire de va-et-vient du rouleau d'entraînement (112).

5. Appareil pour appliquer un vrillage à une fibre optique, selon la revendication 3 ou 4, dans lequel le rouleau d'entraînement (112) se déplace linéairement en va-et-vient avec une amplitude constante et une fréquence de vibration constante sur le centre de l'axe d'étirage.

6. Appareil pour appliquer un vrillage à une fibre optique, selon la revendication 5,
dans lequel le rouleau de guidage (111) et le rouleau d'entraînement (112) sont agencés de telle façon qu'une direction d'étirage d'une fibre optique en contact avec le rouleau d'entraînement (112) coïncide sensiblement avec une direction d'étirage d'une fibre optique en contact avec le rouleau de guidage (111).

7. Appareil pour appliquer un vrillage à une fibre optique, selon la revendication 6, dans lequel le rouleau de guidage (111) et le rouleau d'entraînement (112) sont en contact avec la fibre optique tout en se faisant mutuellement face, en se basant sur la direction d'étirage.

8. Appareil pour appliquer un vrillage à une fibre optique, selon la revendication 3, comprenant en outre un rouleau de guidage et de support (113) installé entre le rouleau d'entraînement (112) et la bobine de réception (109) pour introduire la fibre optique vers la bobine de réception (109) de manière à coïncider avec l'axe d'étirage.

9. Appareil pour appliquer un vrillage à une fibre optique, selon la revendication 8, dans lequel des surfaces de contact (113b, 113c) du rouleau de guidage et de support (113) ont approximativement une forme en V, et une surface incurvée est formée au niveau d'une vallée centrale (113a) des surfaces de contact.

10. Appareil pour appliquer un vrillage à une fibre optique, selon la revendication 9, dans lequel le rouleau d'entraînement (112) est positionné entre le rouleau de guidage (111) et le rouleau de guidage et de support (113), et le rouleau d'entraînement est en contact avec la fibre optique pour faire face vers le rouleau de guidage (111) et le rouleau de guidage et de support (113), en se basant respectivement sur l'axe étirage.

11. Appareil pour fabriquer une fibre optique, comprenant :
des moyens (101) pour former une fibre optique nue (102) en tirant une ébauche de fibre optique (103) ;
des moyens (106) pour revêtir au moins une couche de revêtement autour de la fibre optique nue ;
un cabestan (108) pour commander une vitesse d'étirage de la fibre optique ;
une bobine de réception (109) pour enrouler la fibre optique qui passe à travers le cabestan autour d'une bobine ; et
un dispositif de vrillage de fibre optique (110) installé entre les moyens de revêtement (106) et le cabestan (108) pour vriller la fibre optique en se basant sur un axe longitudinal,
dans lequel le dispositif de vrillage de fibre optique (110) inclut :
un rouleau d'entraînement (112) ayant des surfaces de contact (112b, 112c) avec une forme approximativement en V de sorte qu'une surface incurvée est formée au niveau d'une vallée centrale (112a) des surfaces de contact, le rouleau d'entraînement étant linéairement en va-et-vient dans une direction perpendiculaire à un axe d'étirage en recevant la fibre optique revêtue sur la surface incurvée de manière à imposer une force de rotation dans une direction circonférentielle à la fibre optique revêtue ;
des moyens d'entraînement de rouleau (115) pour faire vibrer le rouleau d'entraînement dans une direction perpendiculaire à l'axe d'étirage ; et
un rouleau de guidage (111) en contact avec la fibre optique revêtue dans une zone entre une extrémité inférieure du dispositif de revêtement (106) et une extrémité supérieure du rouleau d'entraînement (112), le rouleau de guidage guidant la fibre optique en contact dans une direction longitudinale de sorte que la fibre optique n'est pas déviée de plus d'une plage prédéterminée en se basant sur l'axe d'étirage,
dans lequel une distance (1) entre le rouleau d'entraînement (112) et le rouleau de guidage (111) dans la direction de l'axe d'étirage est fixée de manière à satisfaire un taux de vrillage prédéterminé (tours/mètre).

12. Appareil pour fabriquer une fibre optique, selon la revendication 11,
dans lequel des surfaces de contact (111 b, 111 c) du rouleau de guidage (111) ont une forme approximativement en V, et une surface incurvée est formée au niveau d'une vallée centrale (111a) des surfaces de contact,
grâce à quoi la fibre optique au-dessous du dispositif de revêtement coïncide sensiblement avec un centre de revêtement même lorsque la fibre optique au-dessus du rouleau d'entraînement (112) est déviée à un certain degré depuis l'axe d'étirage.

13. Appareil pour fabriquer une fibre optique, selon la revendication 12,
dans lequel les rayons (R1, R2) des surfaces incurvées centrales du rouleau de guidage (111) et du rouleau d'entraînement (112) sont au moins plus grands qu'un diamètre de la fibre optique en contact.

14. Appareil pour fabriquer une fibre optique, selon la revendication 13, dans lequel des rayons (R1, R2) des surfaces incurvées centrales du rouleau de guidage (111) et du rouleau d'entraînement (122) sont plus petits qu'une distance linéaire de va-et-vient du rouleau d'entraînement.

15. Appareil pour fabriquer une fibre optique, selon la revendication 14, dans lequel le rouleau d'entraînement (112) se déplace linéairement en va-et-vient avec une amplitude constante et avec une fréquence de vibration constante sur le centre de l'axe d'étirage.

16. Appareil pour fabriquer une fibre optique, selon la revendication 15,
dans lequel le rouleau de guidage (111) et le rouleau d'entraînement (112) sont en contact de sorte que la fibre optique est en face de chacun d'eux, en se basant sur la direction d'étirage ; et
dans lequel le rouleau d'entraînement (111) et le rouleau de guidage (112) sont agencés de telle façon qu'une direction d'étirage d'une fibre optique tirée à l'extrémité inférieure du dispositif de revêtement (105) coïncide sensiblement avec une direction d'étirage d'une fibre optique en contact avec le rouleau d'entraînement (111).

17. Appareil pour fabriquer une fibre optique, selon la revendication 13, comprenant en outre un rouleau de guidage de support (113) installé entre le rouleau d'entraînement (112) et la bobine de réception (109) pour introduire la fibre optique vers la bobine de réception (109) pour coïncider avec l'axe d'étirage.

18. Appareil pour fabriquer une fibre optique, selon la revendication 17,
dans lequel des surfaces de contact (113b, 113c) du rouleau de guidage et de support (113) ont une forme approximativement en V, et une surface incurvée est formée au niveau d'une vallée centrale (113a) des surfaces de contact ;
dans lequel le rouleau de guidage et de support (113) est en contact avec la fibre optique pour la première fois dans une zone entre l'extrémité inférieure du rouleau d'entraînement et la bobine de réception ; et
dans lequel le rouleau d'entraînement (112) est positionné entre le rouleau de guidage (111) et le rouleau de guidage et de support (113), et le rouleau d'entraînement est en contact avec la fibre optique en faisant face vers le rouleau de guidage (111) et le rouleau de guidage et de support (113) respectivement, sur la base de l'axe d'étirage.

19. Procédé pour fabriquer une fibre optique, comprenant les étapes consistant à :
(A) chauffer une ébauche de fibre optique ;
(B) tirer une fibre optique nue (103) à partir de l'ébauche chauffée ;
(C) revêtir au moins une couche de revêtement sur la fibre optique nue étirée ; et
(D) appliquer un couple à la fibre optique revêtue de sorte que la fibre optique tirée depuis l'ébauche est mise en rotation en se basant sur sa direction longitudinale,
dans lequel l'étape (D) inclut encore les opérations consistant à :
(a) guider la fibre optique revêtue de telle façon que la fibre optique ne dévie pas plus d'une plage prédéterminée depuis un axe d'étirage au-dessous d'un point de revêtement de fibre optique ;
(b) mettre en rotation la fibre optique dans le sens des aiguilles d'une montre et dans le sens opposé en recevant la fibre optique revêtue sur des surfaces de contact approximativement en forme de V d'un rouleau d'entraînement (112) qui se déplace verticalement en va-et-vient en se basant sur un axe sensiblement parallèle à la direction d'étirage au-dessous d'un point de guidage ; et
(c) commander un angle (θ) entre la fibre optique en vibration et l'axe d'étirage en ajustant une amplitude (A) du rouleau d'entraînement (112) et une distance (1) entre le point de guidage et le point de vibration,
grâce à quoi un taux de vrillage (tours/mètre) de la fibre optique généré par rotation est ajusté en commandant l'angle (θ) entre la fibre optique en vibration et l'axe d'étirage.

20. Procédé pour fabriquer une fibre optique, selon la revendication 19,
dans lequel le rouleau d'entraînement (112) vibre avec une amplitude constante et avec une fréquence de vibration constante.

21. Procédé pour fabriquer une fibre optique, selon la revendication 20,
dans lequel, afin d'augmenter le taux de vrillage de la fibre optique quand l'amplitude (A) du rouleau d'entraînement est constante, la distance (1) entre le point de guidage et le point de vibration est diminuée pour augmenter l'angle de vibration (θ).

22. Procédé pour fabriquer une fibre optique, selon la revendication 21,
dans lequel une surface incurvée est formée au niveau d'une vallée centrale (112a) des surfaces de contact (112b, 112c) du rouleau d'entraînement (112), et un rayon (R2) de la portion incurvée centrale est au moins supérieur à un diamètre de la fibre optique en contact.

23. Procédé pour fabriquer une fibre optique, selon la revendication 22,
dans lequel la fibre optique revêtue est guidée par un rouleau de guidage (111) dans lequel des surfaces de contact (111b, 111c) ont une forme approximativement en V et une surface incurvée est formée au niveau d'une vallée centrale (111a) des surfaces de contact,
grâce à quoi les vibrations appliquées à la fibre optique par le rouleau d'entraînement (112) sont restreintes pour ne pas atteindre une position proche du point de revêtement, de sorte que la fibre optique passe à travers un centre de revêtement approximatif au niveau du point de revêtement, et la couche de revêtement est formée régulièrement.
